Europäisches Patentamt

European Patent Office

Office européen des brevets

(19)

(11) Numéro de publication : **0 350 388 B1**

(12) # FASCICULE DE BREVET EUROPEEN

(45) Date de publication du fascicule du brevet :
**25.03.92 Bulletin 92/13**

(51) Int. Cl.⁵ : **F24H 1/40, F24H 8/00, F24H 1/52**

(21) Numéro de dépôt : **89401908.2**

(22) Date de dépôt : **04.07.89**

(54) Perfectionnements aux appareils de production d'eau chaude.

(30) Priorité : **05.07.88 FR 8809090**

(43) Date de publication de la demande :
**10.01.90 Bulletin 90/02**

(45) Mention de la délivrance du brevet :
**25.03.92 Bulletin 92/13**

(84) Etats contractants désignés :
**AT BE CH DE ES GB GR IT LI LU NL SE**

(56) Documents cités :
**EP-A- 0 037 333
EP-A- 0 334 736
DE-A- 2 162 139**

(56) Documents cités :
**PATENT ABSTRACTS OF JAPAN, vol. 10, no.
55 (M-458)[2112], 5 mars 1986, page 40 M 458;
& JP-A-60 202 260 (MATSUSHITA DENKI SAN-
GYO K.K.) 12-10-1985**

(73) Titulaire : **CHAFFOTEAUX & MAURY
2 Rue Chaintron
F-92541 Montrouge (FR)**

(72) Inventeur : **Le Mer, Joseph
1, Cité Bellevue
F-29223 Saint Thegonnec (FR)**

(74) Mandataire : **Behaghel, Pierre et al
CABINET PLASSERAUD 84 rue d'Amsterdam
F-75009 Paris (FR)**

EP 0 350 388 B1

Jouve, 18, rue Saint-Denis, 75001 PARIS

## Description

L'invention est relative aux appareils de production d'eau chaude tels que chauffe-eau, chauffe-bains, chaudières de chauffage central, ...

Elle concerne plus particulièrement, parmi ces appareils, ceux qui comprennent un brûleur alimenté en gaz combustible sous pression et en air comburant et un échangeur de chaleur lui-même composé d'une conduite d'eau s'étendant d'une entrée pour l'eau à chauffer jusqu'à une sortie pour l'eau chauffée et d'un circuit "gaz" comportant un tronçon d'admission pour l'air comburant et un tronçon de guidage pour les gaz de combustion dans lequel ces gaz sont envoyés sur la conduite d'eau de façon à lui céder leurs calories avant d'être évacués refroidis, la conduite d'eau étant constituée par un faisceau de tubes rectilignes, identiques et parallèles répartis selon une couronne cylindrique d'axe vertical et s'étendant chacun entre deux anneaux coaxiaux, le tronçon d'admission de l'air comburant comprenant une chemise annulaire qui entoure le faisceau de tubes et le tronçon de guidage des gaz de combustion comprenant un manchon annulaire intermédiaire disposé à l'intérieur de la chemise annulaire et traversé par le faisceau de tubes (voir EP-A-0 037 333).

L'invention a pour but, surtout, d'améliorer les appareils du genre en question, notamment en ce qui concerne l'efficacité de l'échange calorifique, --ce qui permet de réduire les dimensions et le poids de l'appareil pour une puissance calorifique donnée--, la simplicité de la fabrication et la longévité.

A cet effet, les appareils de production d'eau chaude du genre en question selon l'invention sont essentiellement caractérisés en ce que la base du manchon est raccordée à la base d'une cheminée d'évacuation centrale ouverte vers le haut et en ce que le brûleur s'étend annulairement, à l'entrée supérieure du manchon annulaire, autour de la portion supérieure de la cheminée et est agencé de façon telle que les flammes engendrées par lui soient orientées vers le bas.

Dans des modes de réalisation préférés, on a recours en outre à l'une et/ou à l'autre des dispositions suivantes :

– l'échangeur de chaleur de l'appareil comprend deux conduites d'eau indépendantes affectées respectivement à l'eau sanitaire et à l'eau de chauffage, chaque conduite comprenant une partie de chaque tube rectiligne et une partie de chaque anneau, chaque partie d'anneau d'une conduite donnée étant raccordée de façon étanche exclusivement aux parties de tube correspondant à cette conduite, et les anneaux sont cloisonnés intérieurement de façon à décomposer l'ensemble des n parties de tube de chaque conduite en p nappes contiguës comprenant chacune n/p parties de tube, p étant un nombre pair, de préférence égal à 6 ou 8, de sorte que la circulation de l'eau dans les nappes contiguës s'effectue alternativement vers le haut et vers le bas,

– dans un appareil selon l'alinéa précédent, les tubes rectilignes sont des doubles tubes comprenant un premier tube de section droite elliptique avec le grand axe de l'ellipse s'étendant radialement par rapport à l'axe de l'appareil et un second tube de section droite circulaire logé jointivement dans la zone centrale du premier tube, la portion de chaque double tube ainsi formé affectée à l'eau sanitaire étant le volume intérieur au tube intérieur et la portion restante du volume intérieur au premier tube étant affectée à l'eau de chauffage,

– l'appareil comprend à proximité des faces "aval" des tubes, c'est-à-dire des faces, de ces tubes, situées du côté des sorties des gaz chauds, des déflecteurs profilés de façon à augmenter l'échange thermique entre ces gaz et ces faces aval,

– l'appareil comprend des chicanes disposées en travers du manchon intermédiaire de façon à améliorer l'échange thermique entre les gaz chauds et les tubes,

– le manchon annulaire intermédiaire comprend une portion supérieure élargie formant chambre annulaire de combustion,

– la totalité de l'air comburant admis à travers la chemise annulaire est envoyée dans le manchon annulaire intermédiaire à travers des orifices, du brûleur, aux centres desquels est admis le gaz combustible,

– une grille dans laquelle sont percés les orifices du brûleur annulaire se trouve au niveau du sommet de l'anneau supérieur constitutif de la conduite d'eau,

– la zone de raccordement entre la base du manchon annulaire intermédiaire et la base de la cheminée est délimitée inférieurement par une paroi inclinée propre à recueillir les condensats et raccordée à un embout d'évacuation inférieur.

L'invention comprend, mises à part ces dispositions principales, certaines autres dispositions qui s'utilisent de préférence en même temps et dont il sera plus explicitement question ci-après.

Dans ce qui suit, l'on va décrire deux modes de réalisation de l'invention en se référant aux dessins ci-annexés d'une manière bien entendu non limitative.

Les figures 1 et 2, de ces dessins, montrent respectivement en coupe verticale axiale selon I-I, figure 2 et en coupe horizontale transversale selon II-II, figure 1 un appareil de production d'eau chaude établi selon l'invention.

La figure 3 montre semblablement à la figure 1, mais un peu plus schématiquement, une variante d'un tel appareil également conforme à l'invention.

Les figures 4 et 5 sont des schémas relatifs à la circulation de l'eau dans l'appareil de la figure 3.

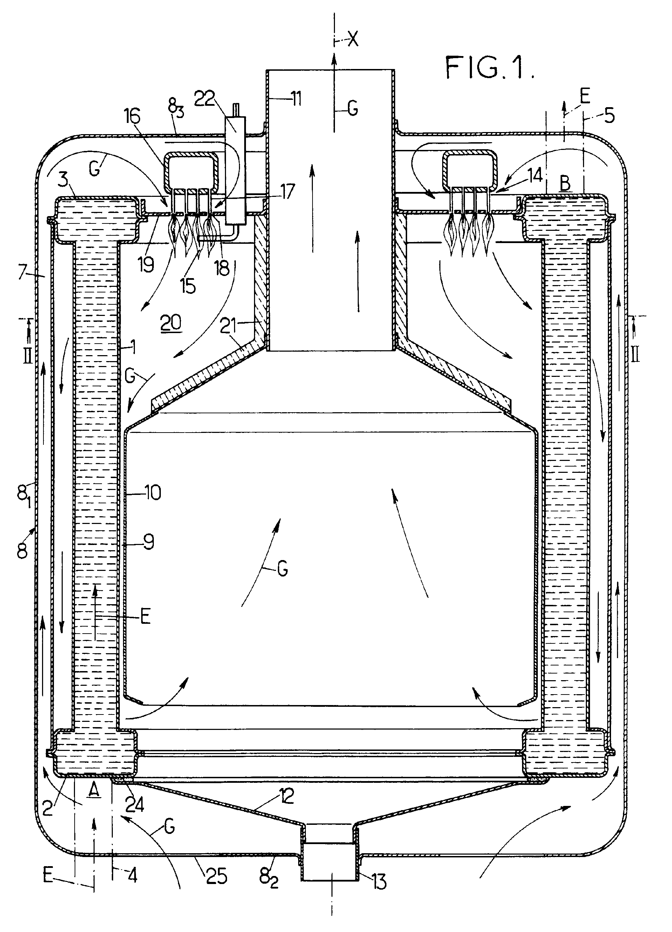

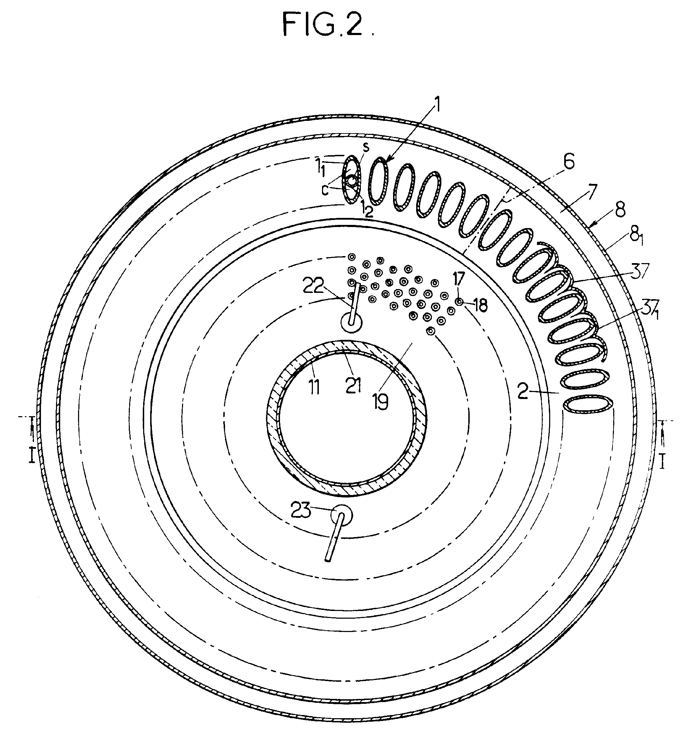

L'appareil montré sur les figures 1 et 2 se présente sous la forme générale d'un cylindre de révolution d'axe vertical X.

Il comprend une conduite pour l'eau à chauffer, un brûleur à gaz alimenté en un gaz combustible sous pression et un circuit pour les gaz, qui sont constitués en amont par de l'air comburant et, en aval, ou plus précisément à partir du niveau du brûleur, où l'air comburant est mélangé au gaz combustible pour former les flammes de chauffage, par les gaz de combustion.

La conduite d'eau comprend :
– un "barillet" ou faisceau de tubes 1 parallèles, rectilignes et identiques s'étendant selon une couronne cylindrique d'axe X entre un anneau inférieur 2 et un anneau supérieur 3,
– une tubulure 4 d'admission d'eau froide raccordée à l'anneau inférieur 2 en un point A,
– et une tubulure 5 d'évacuation de l'eau chauffée raccordée à l'anneau supérieur 3 en un point B.

Les points de raccordement A et B sont disposés en des emplacements tels, des anneaux 2 et 3, que chaque goutte de l'eau à chauffer soit obligée de parcourir, dans le barillet, non seulement l'un des tubes 1, mais également au moins la moitié de l'étendue circulaire d'un anneau 2 ou 3.

Il est avantageux à cet effet de prévoir dans chacun de ces anneaux une cloison radiale 6 interdisant à l'eau d'emprunter un circuit trop court : de préférence on dispose deux telles cloisons 6 dans respectivement les deux anneaux 2 et 3 en deux zones superposées d'un même plan vertical, le point A d'admission inférieur étant alors placé d'un côté de ce plan et le point B, de l'autre côté.

La section droite de chaque tube 1 présente de préférence la forme d'une ellipse dont le grand axe s'étend radialement par rapport à l'axe X : l'adoption d'une telle forme présente le double avantage de conférer aux tubes une bonne résistance aux déformations et d'obtenir un bon coefficient d'échange thermique entre les tubes et les gaz circulant entre ces tubes.

La portion amont du circuit gaz comprend une chemise cylindrique extérieure 7 à double paroi qui enveloppe le faisceau de tubes 1.

Cette chemise est délimitée extérieurement par la portion latérale périphérique $8_1$ du capot de protection 8 de l'appareil.

Ce capot 8 comprend également deux portions planes horizontales $8_2$ et $8_3$ prolongeant inférieurement et supérieurement la portion latérale $8_1$ et constituant le fond et le toit de l'appareil.

Le fond $8_2$ est évidé par un orifice 25 communiquant avec l'air libre, orifice qui constitue l'ouverture d'admission de l'air comburant dans la chemise 7.

La portion aval du circuit gaz comprend :
– un manchon intermédiaire 9 qui est disposé à l'intérieur de la chemise 7 et qui est traversé par les tubes 1,
– et une cheminée centrale 10 dont la base est raccordée à la base du manchon 9 et dont la portion supérieure, en forme de col cylindrique et rétréci 11, est raccordée supérieurement à un conduit extérieur d'évacuation.

La base commune de raccordement entre le manchon 9 et la cheminée 10 est délimitée inférieurement par une paroi 12 inclinée en entonnoir, propre à recueillir les condensats et à les déverser dans un embout d'évacuation inférieur central 13.

Le brûleur 14 présente une forme annulaire entourant le col 11 et il est agencé de façon à produire des flammes 15 orientées vers le bas.

Plus précisément il comporte ici une nourrice 16 alimentée en gaz combustible sous pression et raccordée à une pluralité d'aiguilles de distribution 17 qui débouchent aux centres de lumières 18 évidées dans une paroi 19.

Cette paroi ajourée 19 présente la forme générale d'une rondelle plane horizontale reliant transversalement le col 11 à l'anneau 3.

Chaque lumière 18 est donc alimentée en son centre par du gaz combustible et pour le restant de sa section droite par de l'air comburant provenant de la chemise 7.

Les différentes cotes et configurations des aiguilles 17 et des trous 18 sont choisies de façon telle que le mélange air comburant-gaz combustible projeté vers le bas à travers chaque lumière 18 ait la composition conduisant à une bonne combustion (léger excès d'air).

Un brûleur de ce type a été décrit dans la demande de brevet EP-A-0 334 736, faisant parti de l'état de la technique en vertu de l'Article 54 (3) CBE, de la demanderesse.

La chambre de combustion annulaire 20 dans laquelle sont formées les flammes 15 dirigées vers le bas est la zone supérieure élargie du manchon 9, entourant la base du col de cheminée 11.

Pour éviter un transfert thermique trop important des calories engendrées dans cette chambre vers le col 11, on tapisse avec un revêtement 21 réfractaire et thermiquement isolant la paroi qui sépare ce col de cette chambre, paroi qui présente un tronçon supérieur cylindrique et un tronçon inférieur tronconique divergeant vers le bas.

On voit encore sur les dessins :
– une électrode d'allumage 22,
– un détecteur de flamme 23 situé en une position diamétralement opposée de l'allumeur 22 par rapport à l'axe X,
– et un joint d'étanchéité annulaire 24 interposé entre l'entonnoir 12 et l'anneau inférieur 2.

Les différents éléments constituant la conduite d'eau et le circuit gaz de l'appareil sont avantageusement constitués par des feuilles minces embouties en acier inoxydable qui sont serties ou soudées les unes sur les autres.

Le fonctionnement de l'appareil décrit ci-dessus est le suivant.

On suppose que ce fonctionnement correspond à un régime de croisière normal, après allumage du brûleur : cet allumage est commandé d'une manière connue, soit par la circulation de l'eau dans la conduite 1-5, soit par franchissement d'un seuil de température. Cette commande se traduit par l'ouverture d'une vanne d'alimentation de la nourrice 16 en gaz combustible, l'allumage du mélange air-gaz alors délivré à travers les lumières 18 étant effectué par des étincelles provenant de l'allumeur 22 avec contrôle par le détecteur 23.

L'eau à chauffer circule selon les flèches E.

Elle est admise à travers la tubulure 4 dans l'anneau inférieur 2.

De là elle s'élève à travers les tubes 1 jusqu'à l'anneau 3, puis elle sort de l'appareil réchauffé à travers la tubulure 5.

Vu l'identité des pertes de charge subies par l'eau dans tous les circuits en parallèle susceptibles d'être empruntés par cette eau, le débit de l'eau est réparti identiquement entre tous les tubes 1 et le volume d'eau en circulation s'élève donc simultanément à travers la totalité de ces tubes.

Les gaz circulent selon les flèches G.

L'air ambiant est d'abord introduit à la base de l'appareil en 25 et il est réchauffé de quelques degrés en s'élevant dans la chemise 7, après quoi il chevauche l'anneau supérieur 3 en changeant de sens et parvient en descendant au niveau du brûleur.

Il est alors éjecté à travers les lumières 18, au niveau desquelles il rejoint les jets centraux de gaz combustible sortant des aiguilles 17.

La combustion du mélange air-gaz ainsi projeté engendre les flammes 15 dans la chambre de combustion 20.

Les gaz de combustion très chauds provenant de cette chambre 20 longent ensuite les tubes 1 en entourant ces tubes selon un courant descendant.

A la base de ces tubes, les gaz refroidis longent encore l'anneau inférieur 2 avant de rebrousser chemin une nouvelle fois pour s'échapper vers le haut à travers la cheminée centrale 10-11.

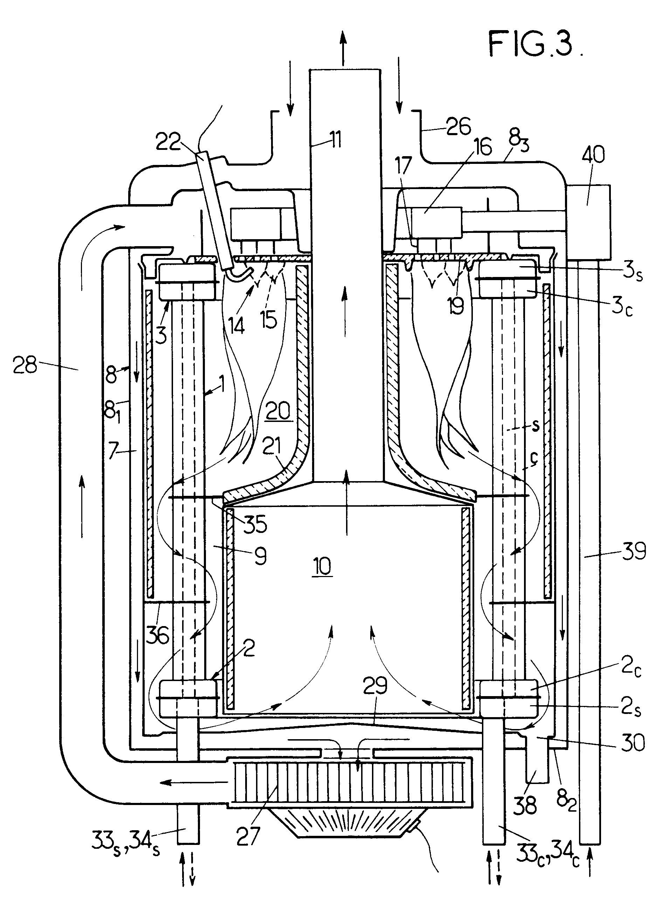

Dans l'appareil de production d'eau chaude selon les figures 3 à 5 on retrouve un certain nombre des caractéristiques qui ont été précédemment décrites à propos de l'appareil des figures 1 et 2 et les éléments correspondants sont affectés sur les dessins des mêmes références que précédemment.

Ce nouvel appareil diffère du précédent par les différents points décrits ci-après.

Au lieu d'être admis à la base de la chemise cylindrique extérieure 7, l'air comburant est admis ici dans cette chemise à partir de son sommet, à travers un col 26 entourant avec jeu la partie haute 11 de la cheminée centrale, ledit col prolongeant vers le haut le couvercle $8_3$ du capot.

L'air en question circule alors de haut en bas dans ladite chemise 7, il est repris à la base de cette chemise, à travers un trou évidé dans le centre du fond $8_2$, par un ventilateur 27 disposé au-dessous de ce trou, puis il est refoulé à travers une canalisation 28 au-dessus du brûleur annulaire 14.

Le fond 29 destiné à recueillir les condensats est encore conique, mais il présente ici sa pointe vers le haut et non pas vers le bas et les condensats recueillis sont évacués à travers une ouverture excentrée 30.

Au lieu d'être répartis en haut et en bas de l'appareil, la totalité des raccords pour l'eau et pour le gaz combustible sont ici disposés à la base de l'appareil, ce qui facilite les montages et démontages.

Au lieu d'être constitué par un appareil à circuit d'eau unique du type des chauffe-eau, l'appareil ici considéré est une chaudière mixte permettant d'effectuer en même temps le chauffage central par circulation d'eau chaude dans des radiateurs et le chauffage de l'eau sanitaire.

Son échangeur comprend à cet effet deux conduites d'eau indépendantes comprenant chacune une partie de chaque tube à eau 1 et une partie de chaque anneau 2,3.

Plus précisément, chaque tube 1 est ici un double tube composé d'un premier tube $1_1$ à section elliptique du genre de ceux précédemment décrits et d'un second tube $1_2$ à section circulaire logé jointivement à l'intérieur de la zone centrale du tube $1_1$.

Le volume intérieur à chaque double tube ainsi défini peut être alors considéré comme formé de deux parties, l'une $s$ intérieure au tube circulaire central $1_2$, réservée à la circulation de l'eau sanitaire et l'autre $c$ réservée à la circulation de l'eau de chauffage et comprenant les deux volumes restants disposés de part et d'autre du tube central $1_2$, à l'intérieur du tube elliptique $1_1$.

En outre, chaque anneau 2, 3 est ici un double anneau composé de deux anneaux élémentaires ou moitiés annulaires superposés verticalement l'un à l'autre et chaque conduite comprend une moitié de chaque double anneau, seul raccordé de façon étanche aux parties de tube $s$ ou $c$ concernées.

Dans ce qui suit l'indice $s$ concerne le cicuit d'eau sanitaire et l'indice $c$, le circuit d'eau de chauffage.

C'est ainsi que, dans le mode de réalisation illustré, la moitié inférieure $2_s$ de l'anneau inférieur 2 et la moitié supérieure $3_s$ de l'anneau supérieur 3 sont affectées à l'eau sanitaire alors que les deux autres moitiés d'anneau $2_c$ et $3_c$ sont affectées à l'eau de chauffage.

En outre, chaque couronne cylindrique de $n$ parties de tube $s$ ou $c$ est décomposée en $p$ nappes successives de telles parties de tube, nappes définies comme suit :

    – $p$ est un nombre pair, de préférence égal à 6 ou 8,

    – l'eau circule dans le même sens ascendant ou descendant dans toutes les parties de tube d'une même nappe,

    – l'eau circule dans deux sens opposés dans les nappes contiguës deux à deux.

Pour obtenir un tel schéma, chacun des anneaux élémentaires est divisé circonférentiellement, par des cloisons diamétrales 31, 32, du genre des cloisons 6 ci-dessus, en $p/2$ tronçons identiques successifs, les emplacements respectifs des cloisons 31 dans l'anneau inférieur étant décalés angulairement de $360°/p$ autour de l'axe de l'appareil par rapport à ceux des cloisons 32 dans l'anneau supérieur.

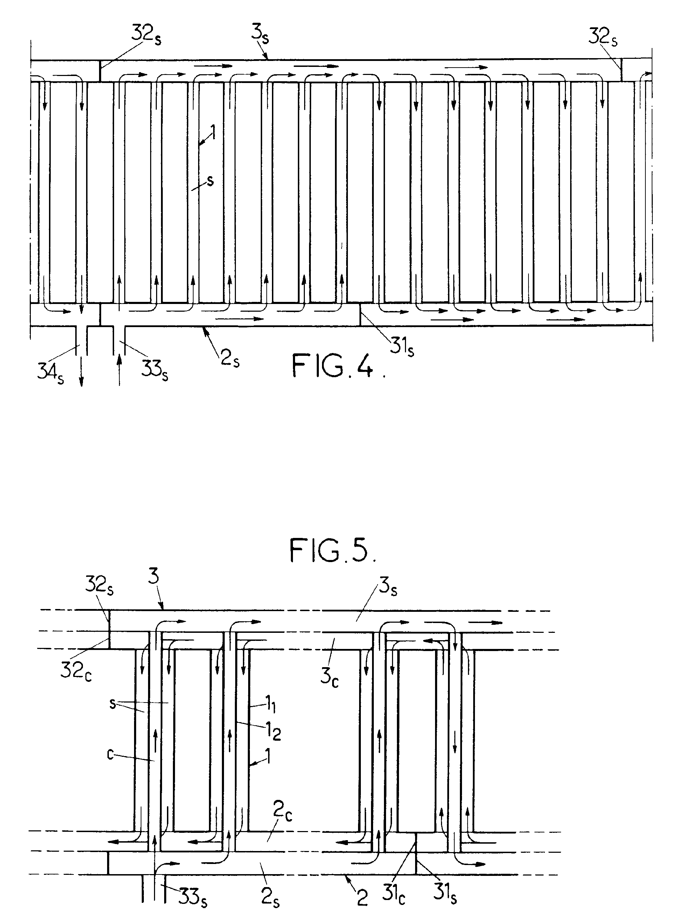

Avec une telle distribution, représentée sur la figure 4 pour l'eau sanitaire, l'eau admise froide ou relativement froide à l'extrémité basse amont $33_s$ d'une nappe emprunte d'abord un tronçon de l'anneau inférieur $2_s$, puis monte dans les $n/p$ parties de tube $s$ parallèles de la première nappe jusqu'à l'anneau supérieur correspondant $3_s$, puis elle parcourt un tronçon de cet anneau supérieur avant de redescendre à travers les parties de tube parallèles de la seconde nappe, et ainsi de suite, l'eau chauffée parvenue en fin de parcours étant finalement évacuée à l'extrémité basse aval $34_s$ de la dernière nappe de rang $p$.

Cette circulation sinueuse de l'eau, par passes successives alternativement ascendantes et descendantes, présente sur la circulation selon la figure 1 l'avantage d'une plus grande vitesse, cette vitesse étant multipliée par le coefficient $p$, ce qui évite la formation de couches limites sur les tubes et donc améliore le coefficient de transfert thermique entre les gaz chauds et ces tubes.

A toutes fins utiles, on indique que, dans un mode de réalisation ayant donné toute satisfaction, les valeurs adoptées respectivement pour les paramètres $n$ et $p$ étaient de 56 et de 8, chaque nappe comprenant donc 7 tubes.

Chacune des deux circulations d'eau sanitaire et d'eau de chauffage est organisée selon le schéma sinueux décrit ci-dessus.

Ces deux circulations étant indépendantes, on peut choisir à volonté leurs sens respectifs ainsi que leurs emplacements angulaires d'admission d'eau froide ou relativement froide et d'évacuation d'eau chaude et même que les nombres de parties de tube comprises par chaque nappe.

Par exemple on peut choisir, comme dans le cas de la figure 5 :

    – des nombres $p$ identiques pour les deux circuits,

    – des sens de circulation opposés pour l'eau dans ces deux circuits, l'eau circulant alors à contre-courant dans lesdits circuits,

    – des emplacements angulaires diamétralement opposés dans la couronne cylindrique formée par les différents tubes pour les admissions correspondant aux deux circuits ainsi que pour leurs évacuations,

    – et des emplacements angulaires identiques deux à deux pour les cloisons de séparation - telles que $31_s$ et $31_c$, ou $32_s$ et $32_c$ - correspondant respectivement aux deux circuits de puisage sanitaire et de chauffage et appartenant à un même anneau double 2 ou 3, à l'exception bien entendu des cloisons d'extrémité.

D'une façon connue en soi, pour améliorer le rendement des échanges thermiques, on prévoit des moyens pour faire circuler l'eau de chauffage dans le circuit correspondant lors de chaque puisage d'eau sanitaire.

Pour améliorer l'échange thermique entre les gaz chauds et les tubes, on a recours en outre avantageusement à des chicanes et/ou à des déflecteurs propres à dévier de manière appropriée le courant desdits gaz.

Les chicanes sont avantageusement deux disques métalliques 35, 36 montés dans le manchon intérieur 9 et encochés de façon à être traversés par les tubes : l'un de ces disques 35, supérieur, est porté par la cloison définissant la cheminée centrale 10 de façon à refouler les gaz radialement vers l'extérieur alors que l'autre disque 36, inférieur, est porté par la cloison délimitant intérieurement la chemise extérieure 7 de façon à refouler les gaz radialement vers l'intérieur, ces gaz étant de nouveau refoulés radialement vers l'extérieur en bas du manchon 9 de façon à contourner l'anneau inférieur 2.

Les déflecteurs sont, quant à eux, constitués par des écrans profilés 37 (fig. 2) disposés à proximité des faces "aval" des tubes, c'est-à-dire des faces, de ces tubes, disposées du côté de la sortie des gaz chauds passant radialement entre lesdits tubes.

Le profil de ces écrans 37 est prévu de façon à envoyer lesdits gaz contre lesdites faces aval et à augmenter leur vitesse de circulation.

En outre, des lumières $37_1$ sont pratiquées dans lesdits écrans de façon à former des passages pour les gaz.

Les déflecteurs 37 peuvent être montés sur les chicanes 36 et prendre appui latéralement contre les tubes.

Ils peuvent également être limités à leurs seules portions incurvées comprises entre les tubes, portions reliées entre elles par des bandes continues au moins au voisinage de leurs extrémités axiales.

Sur la figure 3 on voit, rassemblés en bas de l'appareil :

    – les embouts à raccorder $33_s$, $33_c$, $34_s$ et $34_c$ correspondant respectivement aux entrées d'eau sanitaire et d'eau de chauffage et aux sorties d'eau sanitaire et d'eau de chauffage,

– un embout 38 prolongeant vers le bas l'orifice 30 d'évacuation des condensats,

– et une tubulure 39 propre à admettre le gaz combustible dans la nourrice 16 par l'intermédiaire d'un organe de régulation 40.

En suite de quoi, et quel que soit le mode de réalisation adopté, on dispose finalement d'un appareil de production d'eau chaude dont la constitution et le fonctionnement résultent suffisamment de ce qui précède.

Cet appareil présente de nombreux avantages par rapport à ceux antérieurement connus, et notamment les suivants :

– le rendement de l'échange thermique est très élevé,

– la fabrication de l'appareil est particulièrement simple,

– et celui-ci présente une robustesse et une longévité remarquables, ainsi qu'un encombrement réduit.

**Revendications**

1. Appareil de production d'eau chaude comprenant un brûleur alimenté en gaz combustible sous pression et en air comburant et un échangeur de chaleur lui-même composé d'une conduite d'eau s'étendant d'une entrée pour l'eau à chauffer jusqu'à une sortie pour l'eau chauffée et d'un circuit "gaz" comportant un tronçon d'admission pour l'air comburant et un tronçon de guidage pour les gaz de combustion dans lequel ces gaz sont envoyés sur la conduite d'eau de façon à lui céder leurs calories avant d'être évacués refroidis, la conduite d'eau étant constituée par un faisceau de tubes rectilignes, identiques et parallèles (1) répartis selon une couronne cylindrique d'axe vertical et s'étendant chacun entre deux anneaux coaxiaux (2,3), le tronçon d'admission de l'air comburant comprenant une chemise annulaire (7) qui entoure le faisceau de tubes, et le tronçon de guidage des gaz de combustion comprenant un manchon annulaire intermédiaire (9) disposé à l'intérieur de la chemise annulaire et traversé par le faisceau de tubes, caractérisé en ce que la base du manchon intermédiaire (9) est raccordée à la base d'une cheminée d'évacuation centrale (10,11) ouverte vers le haut et en ce que le brûleur (14) s'étend annulairement, à l'entrée supérieure du manchon intermédiaire (9), autour de la portion supérieure (11) de la cheminée et est agencé de façon telle que les flammes (15) engendrées par lui soient orientées vers le bas.

2. Appareil selon la revendication 1, caractérisé en ce que son échangeur de chaleur comprend deux conduites d'eau indépendantes affectées respectivement à l'eau sanitaire et à l'eau de chauffage, chaque conduite comprenant une partie (s, c) de chaque tube rectiligne et une partie ($2_s$, $3_s$ ; $2_c$, $3_c$) de chaque anneau, chaque partie d'anneau d'une conduite donnée étant raccordée de façon étanche exclusivement aux parties de tube correspondant à cette conduite, et en ce que les anneaux sont cloisonnés intérieurement (en $31_s$, $31_c$, $32_s$, $32_c$) de façon à décomposer l'ensemble des n parties de tube de chaque conduite en p nappes contiguës comprenant chacune n/p parties de tube, p étant un nombre pair, de préférence égal à 6 ou 8, de sorte que la circulation de l'eau dans les nappes contiguës s'effectue alternativement vers le haut et vers le bas.

3. Appareil selon la revendication 2, caractérisé en ce que les tubes rectilignes (1) sont des doubles tubes comprenant un premier tube ($1_1$) de section droite elliptique avec le grand axe de l'ellipse s'étendant radialement par rapport à l'axe (X) de l'appareil et un second tube ($1_2$) de section droite circulaire logé jointivement dans la zone centrale du premier tube, la partie de chaque double tube ainsi formé affectée à l'eau sanitaire étant le volume ($\underline{s}$) intérieur au tube intérieur et la partie restante ($\underline{c}$) du volume intérieur au premier tube étant affectée à l'eau de chauffage.

4. Appareil selon l'une quelconque des revendications 2 et 3, caractérisé en ce qu'il comprend à proximité des faces "aval" des tubes, c'est-à-dire des faces, de ces tubes, situées du côté des sorties des gaz chauds, des déflecteurs (37) profilés de façon à augmenter l'échange thermique entre ces gaz et ces faces aval.

5. Appareil selon l'une quelconque des précédentes revendications, caractérisé en ce qu'il comprend des chicanes (35, 36) disposées en travers du manchon intermédiaire (9) de façon à améliorer l'échange thermique entre les gaz chauds et les tubes.

6. Appareil selon l'une quelconque des précédentes revendications, caractérisé en ce que le manchon annulaire intermédiaire (9) comprend une portion supérieure élargie formant chambre annulaire de combustion (20).

7. Appareil selon l'une quelconque des précédentes revendications, caractérisé en ce que la totalité de l'air comburant admis à travers la chemise annulaire (7) est envoyée dans le manchon annulaire intermédiaire à travers des orifices (18), du brûleur, aux centres desquels est admis le gaz combustible.

8. Appareil selon la revendication 7, caractérisé en ce qu'une grille (19) dans laquelle sont percés les orifices (18) du brûleur annulaire (14) se trouve au niveau du sommet de l'anneau supérieur (3) constitutif de la conduite d'eau.

9. Appareil selon l'une quelconque des précédentes revendications, caractérisé en ce que la zone de raccordement entre la base du manchon annulaire intermédiaire (9) et la base de la cheminée (10) est délimitée inférieurement par une paroi inclinée (12, 29) propre à recueillir les condensats et raccordée à un embout d'évacuation inférieur (13, 30).

**Patentansprüche**

1. Heißwassergerät mit einem mit unter Druck stehendem Brenngas und Verbrennungsluft betriebenen Brenner und einem Wärmetauscher, der eine Wasserleitung, die sich von einem Eintritt für das zu erwärmende Wasser bis zu einem Austritt für das erwärmte Wasser erstreckt und einen Gaskreislauf enthält, der aus einem Abschnitt für die Zufuhr der Verbrennungsluft und einem Abschnitt besteht, durch den die Verbrennungsgase geführt werden und in dem die Gase entlang der Wasserleitung strömen, um ihren Wärmeinhalt an diese abzugeben, bevor sie abgekühlt abgezogen werden, wobei die Wasserleitung aus einem Bündel von geraden, identischen und parallel zueinander verlaufenden Rohren (1) besteht, die verteilt in Form eines zylindrischen Kranzes mit senkrechter Achse angeordnet sind und sich zwischen zwei koaxialen Ringleitungen (2, 3) erstrecken, der Abschnitt für die Zufuhr der Verbrennungsluft aus einem Mantelraum (7), der das Rohrbündel umgibt, und der Abschnitt, durch den die Verbrennungsgase geleitet werden, aus einem dazwischen liegenden Ringraum (9) besteht, der im Inneren des Mantelraumes angeordnet ist und den die Rohrbündel durchsetzen, dadurch gekennzeichnet, daß die Basis des Ringraumes (9) mit der Basis eines mittleren Abzugskamins verbunden ist, der nach oben zu offen ist, und daß der Brenner (14) sich ringförmig am oberen Eintrittsende des ringförmigen Ringraumes (9) um den oberen Abschnitt (11) des Kamins erstreckt und so angeordnet ist, daß die von ihm erzeugten Flammen (15) nach unten gerichtet sind.

2. Heißwassergerät nach Anspruch 1, dadurch gekennzeichnet, daß der Wärmetauscher aus zwei voneinander unabhängigen Wasserleitungen besteht, die jeweils für das Sanitärwasser oder für das Heizwasser testimmt sind, wobei jede Leitung aus einem Rohrstück (s, c) jedes geraden Rohres und einem Abschnitt (2s, 3s; 2c, 3c) jeder Ringleitung besteht, jeder Ringabschnitt einer gegebenen Leitung ausschließlich mit Rohrstücken, die dieser Leitung entsprechen, dicht verbunden ist und daß die Ringleitungen innen (bei 31s, 31c, 32s, 32c) so durch eine Wandung abgeteilt sind, daß sie die Gesamtheit von $n$ Rohrstücken jeder Leitung in $p$ benachbarte Ströme aufteilen, von denen jeder $n/p$ Rohrstücke umfaßt, wobei $p$ eine gerade Zahl, vorzugsweise 6 oder 8, ist, so daß das Wasser in benachbarten Strömen oder Gruppen abwechselnd nach oben und nach unten zirkuliert.

3. Heißwassergerät nach Anspruch 2, dadurch gekennzeichnet, daß die geraden Rohre (1) als Doppelrohre ausgebildet sind, die aus einem ersten Rohr ($1_1$) mit elliptischem Querschnitt, wobei sich die größere Achse der Ellipse radial in bezug auf die Achse (x) des Gerätes erstreckt, und aus einem zweiten Rohr ($1_2$) mit kreisförmigem Querschnitt bestehen, das dicht im mittleren bereich des ersten Rohres angeordnet ist, wobei der Abschnitt jedes so gebildeten Doppelrohres, das mit Sanitärwasser beaufschlagt wird, das Volumen s des Innenraumes des inneren Rohres hat, und der restliche Abschnitt c des Inneraumes des ersten Rohres mit Heizwasser beaufschlagt wird.

4. Heißwassergerät nach einem der Ansprüche 2 und 3, dadurch gekennzeichnet, daß in der Nähe der "strömungsabwärts" liegenden Oberflächen der Rohre, d. h. der Oberflächen der Rohre, die auf der Austrittsseite der heißen Gase liegen, Deflektoren (37) angeordnet sind, die so profiliert sind, daß sie den Wärmeaustausch zwischen den Gasen und diesen Oberflächen erhöhen.

5. Heißwassergerät nach einem der vorhergehenden Ansprüche, dadurch gekennzeichnet, daß es mit Schikanen (35, 36) versehen ist, die in Querrichtung des Ringraumes (9) so angeordnet sind, daß sie den Wärmeaustausch zwischen den heißen Gasen und den Rohren erhöhen.

6. Heißwassergerät nach einem der vorhergehenden Ansprüche, dadurch gekennzeichnet, daß der Ringraum (9) einen oberen vergrößerten Abschnitt enthält, der eine ringförmige Verbrennungskammer (20) bildet.

7. Heißwassergerät nach einem der vorhergehenden Ansprüche, dadurch gekennzeichnet, daß die gesamte Verbrennungsluft, die über den Mantelraum (7) zugeführt wird, in den Ringraum (9) über Öffnungen (18) des Brenners eingeleitet wird, durch deren Mitte die Zufuhr des Brenngases erfolgt.

8. Heißwassergerät nach Anspruch 7, dadurch gekennzeichnet, daß sich in Höhe des oberen Bereichs der oberen Ringleitung (3) der Wasserleitung ein Rost(19) befindet, in den die Öffnungen (18) des ringförmigen Brenners (14) gebohrt sind.

9. Heißwassergerät nach einem der vorhergehenden Ansprüche, dadurch gekennzeichnet, daß der Bereich der Verbindung der Basis des Ringraums (9)mit dem unteren Abschnitt des Kamins (10) nach unten durch eine geneigt verlaufende Wandung (12, 29) zum Sammeln von Kondensat begrenzt wird, die an einen unteren Abzugstutzen (13, 30) angeschlossen ist.

**Claims**

1. Hot water production appliance comprising a burner fed with pressurized fuel gas and combustive air and a heat exchanger itself formed of a water conduit extending from an inlet for the water to be heated as far as an outlet for the heated water and a "gas" circuit comprising a combustive air intake section and a guide section of the combustion gases, in which these gases are led on to the water conduit so as to yield up thereto their heat before being discharged cooled, the water conduit being formed by a nest of rectilinear, identical and parallel tubes (1) spaced apart in a cylindrical crown with vertical axis and each extending between two coaxial rings (2,3), the combustive air intake section comprising an annular jacket (7) surrounding the nest of tubes, and the combustion gas guide section comprising an intermediate annular sleeve (9) which is disposed on the inside of the annular jacket and through which the nest of tubes passes, characterized in that the base of the intermediate sleeve (9) is connected to the base of a central discharge chimney (10,11) open at the top and in that the burner (14) extends annularly, at the upper inlet of the intermediate sleeve (9), about the upper portion (11) of the chimney and is adapted so that the flames (15) generated thereby are oriented downwards.

2. Appliance according to claim 1, characterized in that its heat exchanger comprises two independent water conduits assigned respectively to the sanitary water and to the heating water, each conduit comprising a portion (s, c) of each rectilinear tube and a portion $(2_s,3_s; 2_c,3_c)$ of each ring, each ring portion of a given conduit being connected sealingly exclusively to the tube portions corresponding to this conduit, and in that the rings are partitioned on the inside (at $31_s,31_c,32_s,32_c$), so as to break up the assembly of the n tube portions of each conduit into p contiguous banks each comprising n/p tube portions, p being an even number, preferably equal to 6 or 8, so that the water flow through the contiguous banks takes place alternately upwards and downwards.

3. Appliance according to claim 2, characterized in that the rectilinear tubes (1) are double tubes comprising a first tube $(1_1)$ with elliptic cross section with the large axis of the ellipsis extending radially with respect to the axis (X) of the appliance and a second tube $(1_2)$ with circular cross section housed jointingly in the central zone of the first tube, the portion of each double tube thus formed assigned to the sanitary water being the volume (s) inside the inner tube and the remaining portion (c) of the inside volume of the first tube being assigned to the heating water.

4. Appliance according to any one of the claims 2 and 3, characterized in that it comprises, in the vicinity of the "downstream" faces of the tubes, i.e. the faces of these tubes situated on the hot gas outlet side, deflectors (37) profiled so as to increase the heat exchange between these gases and these downstream faces.

5. Appliance according to any one of the preceding claims, characterized in that it comprises baffles (35,36) disposed across the intermediate sleeve (9) so as to improve the heat exchange between the hot gases and the tubes.

6. Appliance according to any one of the preceding claims, characterized in the intermediate annular sleeve (9) comprises an upper widened portion forming an annular combustion chamber (20).

7. Appliance according to any one of the preceding claims, characterized in that the whole of the intake of combustive air admitted through the annular jacket (7) is fed into the intermediate annular sleeve through orifices (18), of the burner, in the centre of which orifices the fuel gas is admitted.

8. Appliance according to claim 7, characterized in that the grid (19) in which the orifices (18) of the annular burner (14) are formed is situated at the level of the top of the upper ring (3) forming part of the water conduit.

9. Appliance according to any one of preceding claims, characterized in that the connection zone between the base of the intermediate annular sleeve (9) and the base of the chimney (10) is defined at the bottom by an inclined wall (12,29) adapted to collect the condensates and connected to a lower discharge connection (13,30).

# FIG.1.

# FIG.2 .

# FIG.3.

FIG.4.

FIG.5.